# EUROPÄISCHE PATENTSCHRIFT

(11) **EP 1 338 481 B1**
(45) Veröffentlichungstag und Bekanntmachung des Hinweises auf die Patenterteilung: **22.06.2005**
(21) Anmeldenummer: 03090032.8
(22) Anmeldetag: 06.02.2003
(51) Int. Cl.: B60R 21/16, B60R 21/20

(54) **Airbaganordnung**
Airbag arrangement
Système d'airbag

(30) Priorität: 20.02.2002 DE 10207885
(43) Veröffentlichungstag der Anmeldung: 27.08.2003
(73) Patentinhaber: Takata-Petri AG, 63743 Aschaffenburg (DE)
(72) Erfinder: Rensinghoff, Volker, 63762 Grossostheim (DE)
(74) Vertreter: Baumgärtel, Gunnar, Dr.

(56) Entgegenhaltungen:
- EP-A- 1 164 061
- DE-A- 19 860 804
- DE-A- 19 904 100
- US-A- 3 618 979

## Beschreibung

Die Erfindung bezieht sich auf ein Airbagmodul für Fahrzeuge, und insbesondere auf ein Airbagmodul für mit einem konventionellen Fahrerairbag ausgestattete Kraftfahrzeuge.

Insbesondere aber nicht ausschließlich betrifft die vorliegende Erfindung eine Airbaganordnung für ein Fahrzeug mit einem Fahrerairbag. Die Airbaganordnung weist ein Airbagmodul mit einem Airbag zwischen dem Lenkrad und der Instrumententafel des Fahrzeuges auf. Im Crashfall entfaltet sich der Airbag zwischen dem Lenkrad und der Instrumententafel und stützt dadurch das Lenkrad ab. Dadurch wird erreicht, dass der Fahrerairbag bzgl. des Fahrzeuginsassen besser positioniert ist, da eine Deformation des Lenkrades durch die auf den Fahrerairbag einwirkenden Kräfte im Crashfall mittels des Airbags verhindert oder vermindert wird. Der aufgeblasene Airbag kann sich bis zur Windschutzscheibe des Fahrzeuges erstrecken. Dadurch werden die im Crashfall in das Lenkrad eingeleiteten Kräfte auch in die Windschutzscheibe abgeleitet. Außerdem kann durch geeignete Festlegung der Größe des aufgeblasenen Airbags ein Kontakt eines ungegurteten Fahrzeuginsassen mit der Windschutzscheibe verhindert werden.

### Stand der Technik

Die bei Frontalkollisionen auftretenden Verzögerungen des Fahrers werden in der Regel über den aufgeblasenen Fahrerairbag in das Lenkrad und in die Lenksäule abgeleitet. Eine Airbaganordnung mit den Merkmalen des Oberbegriffs des Anspruchs 1 ist aus US-A-3,618,979 bekannt. Dabei treten folgende Probleme auf:
- Beim Energieabbau werden Teile des Lenkrades, der Lenksäule, sowie Verstell- und Anbindungselemente des Lenkrades und der Lenksäule deformiert.
- Insbesondere bei starker Insassenvorverlagerung und schlecht zu beherrschender Insassenkinematik (z.B. bei einem nicht angeschnallten Fahrer) wird das Subsystem "Lenkrad und Lenksäule" durch hohe Kräfte deformiert. Eine optimale Positionierung des Airbags bzgl. des Insassen kann sich dadurch nicht einstellen. Die Verletzungsgefahr steigt.

Diese Effekte könnten dadurch vermindert werden, dass beispielsweise der Lenkradkranz versteift wird, oder eine vordefinierte Lenksäulenstellung für den Crashfall hergestellt oder aufrechterhalten wird. Je nach Styling des Lenkrades ist jedoch eine Versteifung oft nicht möglich. Eine vordefinierte Lenksäulenstellung ist nur mit hohem Aufwand herstellbar; beispielsweise können Versteifungen in der Lenksäulenanbindung oder zusätzliche Deformationselemente in und/oder an der Lenksäule vorgesehen sein.

Im Falle eines nicht angeschnallten Insassen kann durch einen größeren Airbagumfang und/oder Fangbänder im Airbag versucht werden, die Positionierung des Airbags bzgl. des Insassen zu optimieren. Weiterhin kann ein Knie-Airbag vorgesehen sein.

Diese Lösungsversuche sind jedoch aufwändig und zum Teil nicht optimal wirksam.

Die vorliegende Erfindung hat zur Aufgabe, sich dieser Problematik anzunehmen. Diese Aufgabe wird durch die im unabhängigen Ansprüch 1 angegebene Erfindung gelöst. Vorteilhafte Ausgestaltungen der Erfindung sind den Unteransprüchen zu entnehmen.

### Zusammenfassung der Erfindung

Erfindungsgemäß ist eine Airbaganordnung für ein Fahrzeug geschaffen, mit einem im Bereich zwischen einem Lenkrad und einer Instrumententafel des Fahrzeuges angeordneten Airbagmodul, wobei das Airbagmodul einen Airbag aufweist, der sich im aufgeblasenen Zustand zwischen dem Lenkrad und der Instrumententafel erstreckt.

Durch einen Airbag zwischen dem Lenkrad und der Instrumententafel des Fahrzeuges zusätzlich zu einem Fahrerairbag kann eine Unterstützung des Subsystemes "Lenkrad und Lenksäule" hergestellt werden. Der Wirkraum des Airbags befindet sich dabei hinter dem Lenkrad ober- und/oder unterhalb der Lenksäulenanbindung. Zur Verhinderung oder Reduzierung von Deformationen leitet der Airbag die ins Lenkrad eingeleiteten Kräfte in die Instrumententafel ab.

Die Funktionsumfänge des Airbags können den Systemanforderungen angepasst werden. Neben dem Abstützen des Lenkradkranzes kann durch die Wahl einer geeigneten Luftsackgröße der Fahrerairbag oberhalb des Lenkrades in Position gehalten werden.

Die erfindungsgemäße Airbaganordnung hat insgesamt den Vorteil, dass die Kinematik des Fahrzeuginsassen im Crashfall dadurch besser beherrschbar wird, dass Deformationen von Lenkrad und Lenksäule unabhängig vom Lenksäulenwinkel und Lenkradeinschlägen verhindert werden können.

Für den Fahrzeughersteller kann dadurch die Konstruktion der Anbindung der Lenksäule am Fahrzeug vereinfacht werden.

Vorzugsweise erstreckt sich der aufgeblasene Airbag entlang der Lenksäule des Fahrzeuges und füllt den Zwischenraum zwischen der Instrumententafel und dem Lenkrad vollständig aus. Dadurch wird eine besonders effektive Abstützung des Lenkrades erreicht.

In einer Ausgestaltung ist das Airbagmodul in die Instrumententafel integriert. Der Vorteil dieser Ausgestaltung liegt insbesondere in der Platzersparnis und der Ästhetik.

In einer anderen Ausgestaltung der Erfindung erstreckt sich der aufgeblasene Airbag bis zur Windschutzscheibe des Fahrzeuges. Diese Ausgestaltung hat den Vorteil, dass die im Crashfall in das Lenkrad eingeleiteten Kräfte nicht nur in die Instrumententafel, sondern auch in die Windschutzscheibe abgeleitet werden. Außerdem werden bei einem ungegurteten Insassen die Kräfte in einer ersten Kontaktphase in die Windschutzscheibe abgeleitet; anschließend bietet der derart ausgestaltete Airbag einen wirksamen Kopfschutz. Ein direkter Kopfkontakt des Insassen mit der Windschutzscheibe kann somit durch eine geeignete Festlegung der Größe des Airbags verhindert werden.

In einer weiteren Ausgestaltung erstreckt der aufgeblasene Airbag sich um die Lenksäule herum in einen Zwischenraum zwischen der Instrumententafel und den Knien eines Fahrzeuginsassen unterhalb der Lenksäule. Dadurch kann ein vorhandener Knieairbag ersetzt und/oder unterstützt werden.

In einer weiteren Ausgestaltung kommt der aufgeblasene Airbag mit dem oben liegenden Bereich des Kranzes des Lenkrades in Berührung und stützt diesen ab. In jenem Bereich, der im aufgeblasenen Zustand mit dem Lenkradkranz in Berührung kommt, kann der Airbag ein Stützelement aufweisen. Das Stützelement dient zur Reduzierung der Nachgiebigkeit des aufgeblasenen Airbags unter Belastung, so dass der Lenkradkranz noch effektiver abgestützt wird.

Vorzugsweise ist das Stützelement durch eine in den Airbag integrierte Verstärkung gebildet. Ein solcher Airbag ist einfach und kostengünstig herstellbar.

### Beschreibung der Zeichnungen

Die Erfindung wird nun anhand von Ausführungsbeispielen in Bezug auf die Zeichnungen erklärt, und es zeigen:
- Figur 1: ein Airbagmodul nach einem ersten Ausführungsbeispiel der Erfindung;
- Figur 2: ein Airbagmodul nach einem zweiten Ausführungsbeispiel der Erfindung;
- Figur 3: ein Airbagmodul nach einem dritten Ausführungsbeispiel der Erfindung; und
- Figur 4: eine Ausgestaltungsvariante des Airbagmoduls aus Figur 1.

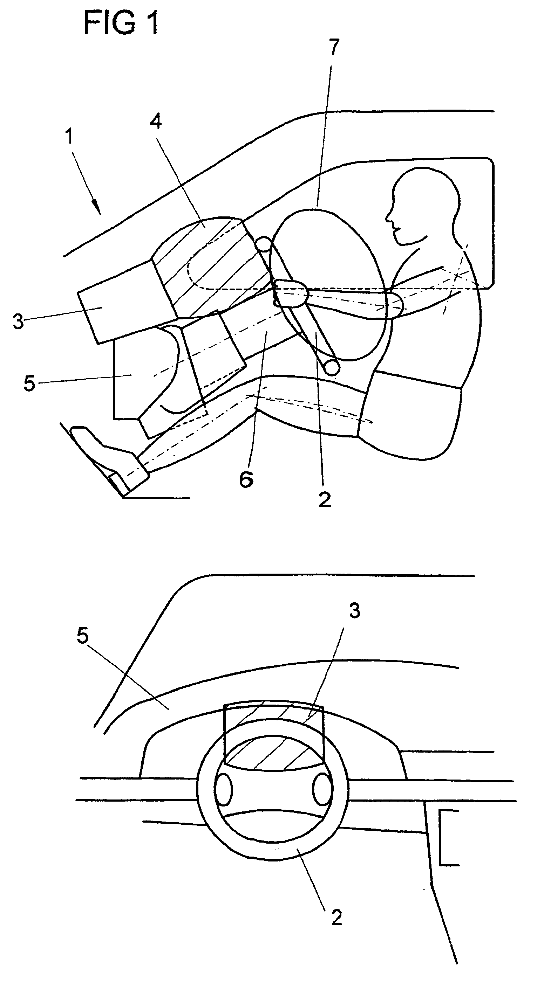

Figur 1 zeigt ein Airbagmodul 1 nach einem ersten Ausführungsbeispiel der Erfindung nach Aktivierung im Crashfall. Figur 1 zeigt oben einen Querschnitt durch eine mit dem Airbagmodul 1 versehene Fahrgastzelle, und unten einen Draufsicht auf ein Lenkrad 2 innerhalb der Fahrgastzelle.

Das Airbagmodul 1 umfasst ein Gehäuse 3 und einen im aufgeblasenen Zustand gezeigten Airbag 4. Das Airbagmodul 1 ist in einer Instrumententafel 5 des Fahrzeuges oberhalb einer Lenksäule 6 angeordnet. Im aufgeblasenen Zustand erstreckt sich der Airbag 4 oberhalb der Lenksäule 6 zwischen dem Lenkrad 2 und der Instrumententafel 5.

Weiterhin zeigt Figur 1 einen herkömmlichen Fahrerairbag 7 im aufgeblasenen Zustand.

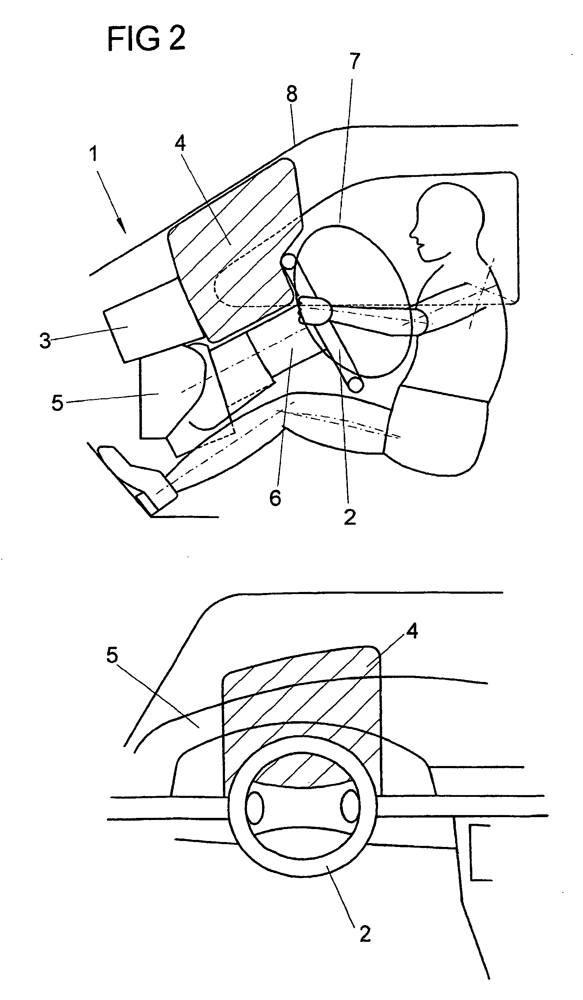

Figur 2 zeigt ein Airbagmodul 1 nach einem zweiten Ausführungsbeispiel der Erfindung. Dieses Ausführungsbeispiel unterscheidet sich von dem ersten Ausführungsbeispiel darin, dass der entfaltete Airbag 4 sich zwischen dem Lenkrad 2 und dem Gehäuse 3 von der Lenksäule 6 nach oben bis zu einer Windschutzscheibe 8 erstreckt.

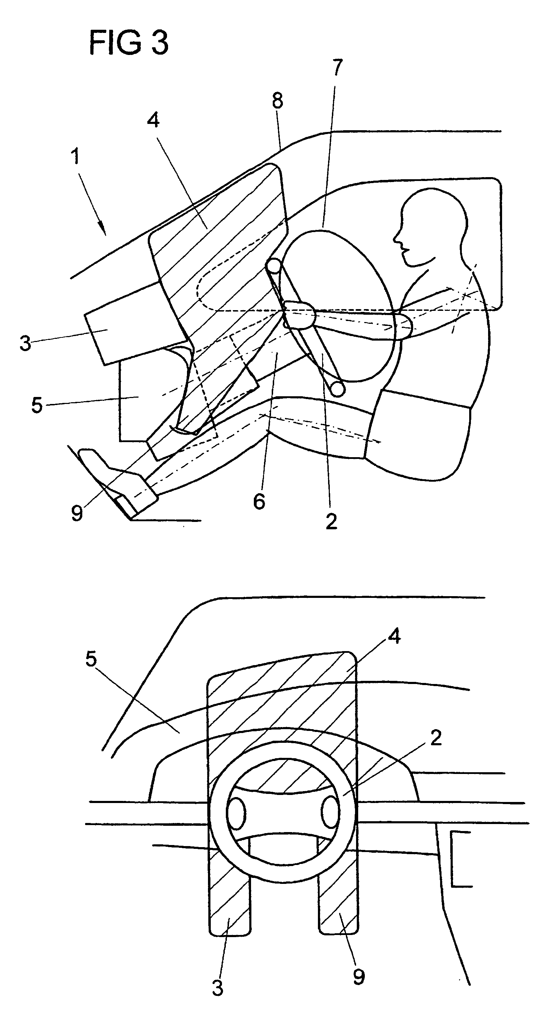

Figur 3 zeigt ein Airbagmodul 1 nach einem dritten Ausführungsbeispiel der Erfindung. In diesem Ausführungsbeispiel weist der aufgeblasene Airbag 4 zwei Kniepolster 9 auf, die sich unterhalb der Lenksäule 6 zwischen der Instrumententafel 5 und den Kniebereichen eines Fahrzeuginsassen erstrecken. Wie im unteren Teil der Figur 3 zu sehen, erstrecken sich die Kniepolster 9 zu beiden Seiten der Lenksäule 6.

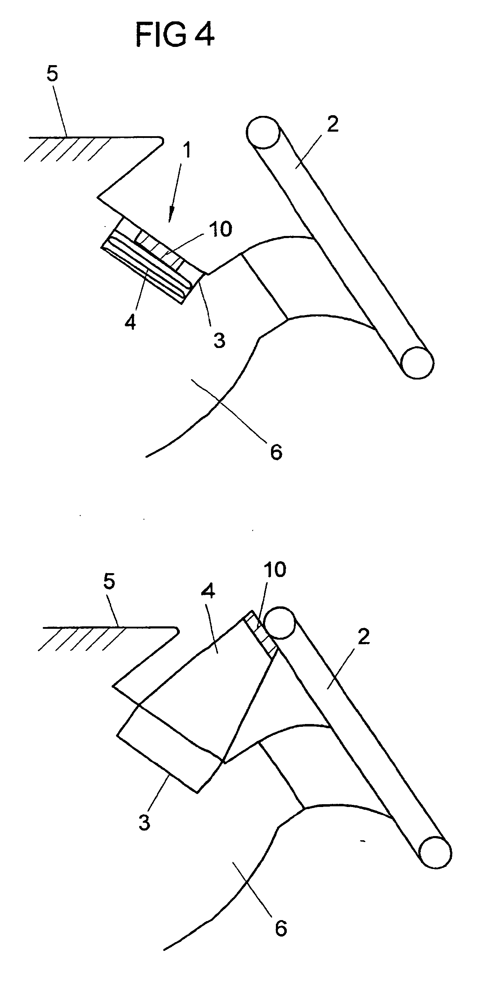

Figur 4 zeigt eine Ausgestaltungsvariante des in Figur 1 gezeigten Airbagmoduls 1. Im oberen Teil ist das Airbagmodul 1 im Ruhezustand, d.h. mit zusammengefaltetem Airbag 4 zu sehen. Im unteren Teil ist der Airbag 4 aufgeblasen.

In jenem Bereich, mit welchem der Airbag 4 im aufgeblasenen Zustand mit dem Kranz des Lenkrades 2 in Berührung kommt, ist ein Stützelement 10 in Form einer Verstärkung vorgesehen. Das Stützelement 10 verbessert das Stützverhalten des Airbags 4, in dem die Nachgiebigkeit des Airbags 4 durch auf diesen durch das Lenkrad 2 ausgeübte Kräfte reduziert ist.

Anzumerken ist, dass die Erfindung nicht auf die beschriebenen Ausführungsbeispiele beschränkt ist, sondern Modifikationen im Rahmen des durch die Ansprüche festgelegten Schutzbereiches umfasst.

### Liste der Bezugszeichen

- 1: Airbagmodul
- 2: Lenkrad
- 3: Gehäuse des Airbagmoduls
- 4: Airbag
- 5: Instrumententafel
- 6: Lenksäule
- 7: Fahrerairbag
- 8: Windschutzscheibe
- 9: Kniepolster
- 10: Stützelement

## Patentansprüche

1. Airbaganordnung für ein Fahrzeug, mit einem im Bereich zwischen einem Lenkrad (2) und einer Instrumententafel (5) des Fahrzeuges angeordneten Airbagmodul (1), wobei das Airbagmodul (1) einen Airbag (4) aufweist, und der sich im aufgeblasenen Zustand zwischen dem Lenkrad (2) und der Instrumententafel (5) erstreckt, **dadurch gekennzeichnet, daß** der Airbag (4) zur Verhinderung oder Reduzierung von Deformationen die ins Lenkrad (2) eingeleiteten Kräfte in die Instrumententafel (5) ableitet.

2. Airbaganordnung nach Anspruch 1, **dadurch gekennzeichnet, daß** der aufgeblasene Airbag (4) sich oberhalb einer Lenksäule (6) des Fahrzeuges erstreckt.

3. Airbaganordnung nach Anspruch 1 oder 2, **dadurch gekennzeichnet, daß** der aufgeblasene Airbag (4) sich entlang der Lenksäule (6) des Fahrzeuges erstreckt und den Zwischenraum zwischen der Instrumententafel (5) und dem Lenkrad (2) ausfüllt.

4. Airbaganordnung nach einem der vorhergehenden Ansprüche, **dadurch gekennzeichnet, daß** das Airbagmodul (1) in die Instrumententafel (5) integriert ist.

5. Airbaganordnung nach einem der vorhergehenden Ansprüche, **dadurch gekennzeichnet, daß** der aufgeblasene Airbag (4) sich bis zu einer Windschutzscheibe (8) des Fahrzeuges erstreckt.

6. Airbaganordnung nach einem der vorhergehenden Ansprüche, **dadurch gekennzeichnet, daß** der aufgeblasene Airbag (4) sich um die Lenksäule (6) herum in einen Zwischenraum zwischen der Instrumententafel (5) und den Knien eines Fahrzeuginsassen unterhalb der Lenksäule (6) erstreckt.

7. Airbaganordnung nach einem der vorhergehenden Ansprüche, **dadurch gekennzeichnet, daß** der aufgeblasene Airbag (4) mit dem oben liegenden Bereich des Kranzes des Lenkrades (2) in Berührung kommt und diesen abstützt.

8. Airbaganordnung nach einem der vorhergehenden Ansprüche, **dadurch gekennzeichnet, daß** der Airbag (4) in jenem Bereich, der im aufgeblasenen Zustand mit dem Lenkradkranz in Berührung kommt, ein Stützelement (10) aufweist.

9. Airbaganordnung nach Anspruch 8, **dadurch gekennzeichnet, daß** das Stützelement durch eine in den Airbag (4) integrierte Verstärkung gebildet ist.

## Claims

1. Airbag arrangement for a vehicle, having an airbag module (1) arranged in the region between a steering wheel (2) and an instrument panel (5) of the vehicle, the airbag module (1) having an airbag (4), and the airbag, when inflated, extending between the steering wheel (2) and the instrument panel (5), **characterized in that**, in order to prevent or reduce deformations, the airbag (4) conducts the forces introduced into the steering wheel (2) into the instrument panel (5).

2. Airbag arrangement according to Claim 1, **characterized in that** the inflated airbag (4) extends above a steering column (6) of the vehicle.

3. Airbag arrangement according to Claim 1 or 2, **characterized in that** the inflated airbag (4) extends along the steering column (6) of the vehicle and fills the gap between the instrument panel (5) and the steering wheel (2).

4. Airbag arrangement according to one of the preceding claims, **characterized in that** the airbag module (1) is integrated in the instrument panel (5).

5. Airbag arrangement according to one of the preceding claims, **characterized in that** the inflated airbag (4) extends as far as a windscreen (8) of the vehicle.

6. Airbag arrangement according to one of the preceding claims, **characterized in that** the inflated airbag (4) extends around the steering column (6) into a gap between the instrument panel (5) and the knees of a vehicle occupant below the steering column (6).

7. Airbag arrangement according to one of the preceding claims, **characterized in that** the inflated airbag (4) comes into contact with the top region of the rim of the steering wheel (2) and supports said rim.

8. Airbag arrangement according to one of the preceding claims, **characterized in that** the airbag (4), **in that** region which, when inflated, comes into contact with the steering wheel rim, has a supporting element (10).

9. Airbag arrangement according to Claim 8, **characterized in that** the supporting element is formed by a reinforcement integrated in the airbag (4).

## Revendications

1. Dispositif d'airbag pour un véhicule avec un module d'airbag (1) disposé dans la zone entre le volant (2) et un tableau de bord (5) du véhicule, dans lequel le module d'airbag (1) présente un airbag (4) et qui s'étend à l'état gonflé entre le volant (2) et le tableau de bord (5), **caractérisé en ce que** l'airbag (4), en vue de l'évitement ou de la réduction des déformations, fait dévier les forces appliquées sur le volant (2) dans le tableau de bord (5).

2. Dispositif d'airbag selon la revendication 1, **caractérisé en ce que** l'airbag gonflé (4) s'étend au-dessus d'une colonne de direction (6) du véhicule.

3. Dispositif d'airbag selon la revendication 1 ou 2, dans lequel l'airbag gonflé (5) s'étend le long de la colonne de direction (6) du véhicule et remplit l'espace intermédiaire entre le tableau de bord (5) et le volant (2).

4. Dispositif d'airbag selon l'une des revendications précédentes, dans lequel le module d'airbag (1) est intégré dans le tableau de bord (5).

5. Dispositif d'airbag selon l'une des revendications précédentes, dans lequel l'airbag gonflé (4) s'étend jusqu'à un pare-brise (8) du véhicule.

6. Dispositif d'airbag selon l'une des revendications précédentes, dans lequel l'airbag gonflé (4) s'étend autour de la colonne de direction (6) dans un espace intermédiaire entre le tableau de bord (5) et les genoux d'un passager au-dessous de la colonne de direction (6).

7. Dispositif d'airbag selon l'une des revendications précédentes, dans lequel l'airbag gonflé (4) vient en contact avec la zone supérieure de la couronne du volant de direction (2) et supporte celle-ci.

8. Dispositif d'airbag selon l'une des revendications précédentes, dans lequel l'airbag (4) présente un élément d'appui (10) dans la zone qui vient en contact à l'état gonflé avec la couronne du volant.

9. Dispositif d'airbag selon la revendication 8, dans lequel l'élément d'appui est formé par un renfort intégré dans l'airbag (4).
